# EUROPEAN PATENT SPECIFICATION

(11) **EP 1 068 271 B1**
(45) Date of publication and mention of the grant of the patent: **14.05.2003**
(21) Application number: 99911929.0
(22) Date of filing: 23.03.1999
(51) Int. Cl.: C08L 95/00

(54) **MASTIC COMPOSITION AND METHOD OF PREPARING SAME**
MASTIXZUSAMMENSETZUNG UND VERFAHREN ZUR IHRER HERSTELLUNG
COMPOSITION DE MASTIC ET PROCEDE DE PREPARATION ASSOCIE

(30) Priority: 02.04.1998 GB 9807019
(43) Date of publication of application: 17.01.2001
(73) Proprietor: Tarmac Limited, Ettingshall, Wolverhampton WV4 6JP (GB)
(72) Inventor: ROBINSON, Howard Lloyd, Much Wenlock, Shropshire SY5 6LP (GB); STUBBS, David John, Norborough, Norfolk PE32 1SS (GB); DAY, Dennis, Deeside Flintshire (GB)
(74) Representative: Wardley, Diana Mary
(86) International application number: GB9900909
(87) International publication number: WO99051677

(56) References cited:
- EP-A- 0 578 057
- WO-A-97/24410
- DE-A- 2 209 549
- DE-A- 19 514 809

## Description

### Description of Invention

This invention relates to a mastic composition of the type comprising a mixture of aggregate and filler with bitumen.

Conventionally, mastic products of this type are made using a process which consumes a substantial amount of energy, mainly in the form of heat. In particular, all the components of the mastic are separately heated to an appropriate temperature in order to obtain a flowable product which is then cast into blocks which are then allowed to solidify.

Patent specification WO97/24410 discloses a process which attempts to reduce the energy requirement by adopting a two-stage process which leads directly to the formation of a granular product rather than solid blocks. The two-stage process involves a first stage in which all of the required filler material, which may not have been pre-heated, and all of the required aggregate material, which will have been pre-heated at least to the extent necessary to dry it, is mixed with part of the required bitumen, which has been pre-heated to the usual temperature. The first stage of mixing is carried out without the application of heat so that the temperature of the partial mixture falls to a value substantially lower than that normally used for the conventional mixing process.

In the second stage of the process the remainder of the bitumen is added to the partial mixture after the latter has been allowed to cool, the bitumen again being added at the conventional temperature and continued mixing is said to produce a loosely-bound, easy-crumbling mass which readily produces a free-flowing particulate material on attrition. Although the overall composition of the product remains within the conventional range, the physical form of the product is granular as a result of the manufacturing process, which also requires less energy than the conventional process.

The present invention provides an improved method of manufacturing such a granular mastic of generally conventional composition.

In accordance with the invention, a mastic product comprising bitumen, filler and aggregate is prepared by firstly introducing into a mixer aggregate in an unheated and undried condition and with a water content controlled to be at least substantially 4% by weight by reference to the total mastic composition, then adding all the required bitumen at elevated temperature while the mixer is in operation, subsequently adding the required filler in an unheated condition and continuing mixing operation whilst allowing the mixture to cool, to produce a granular product.

The moisture content is controlled so as to provide sufficient "lubrication" for which a minimum input typically of 4% is appropriate, although some minor variation of this figure can be expected in practice between different production batches. Although the upper limit for this purpose is not critical, in practice the maximum water input should preferably not exceed about 7% of the total composition or 10% of the aggregate weight because of potential problems at the point of use. For these reasons, water may be added to, or drained from, the aggregate before or after it is introduced into the mixer in order to maintain a designed mean water content in the final product of about 3.5% and typically a maximum of 4 %.

Typically, the bitumen will be pre-heated to a temperature in the region of 200°C, but it is cooled rapidly as it is mixed with the wetted aggregate, with the result that the bitumen tends to coat the aggregate material only partially. The subsequently added unheated filler material then tends to adhere to the cooled bitumen so as largely to prevent the partially bitumen-coated aggregate binding together in a solid mass.

The bitumen can contain polymers ranging from plastomers to elastomers. Examples of suitable plastomers include ethyl vinyl acetate (EVA), polyethylene (PE), polyethelene (PE), polypropylene (LDPE). Examples of suitable elastomers include styrene-butadiene-styrene (SBS), styrene-butadiene rubber (SBR), polybutadiene (PBd), styrene-ethylene-butadiene-styrene (SEBS).

The mastic asphalt mixture may contain other additives to alter the binder and/or mix rheology. Examples of these modifiers include cellulose fibres, inorganic fibres and stearic acid.

The invention also resides in a mastic product as made by the above process.

The invention will now be described with reference to the following Examples.

### Example 1: a marine mastic

This Example describes the manufacture of a 100 tonne batch of mastic primarily intended for marine applications. However, it is to be understood that the process, and the product of the process, is not limited to marine mastic products, as will be evident from Examples 4 and 5 below.

### (a) Composition:

In this Example, the bitumen used is 85/25 grade bitumen, in the quantity required to provide between 14 and 16 percent by weight of the final mastic product.

The aggregate used has a particle size range as set out in the following table.

| **Grading percent passing BS Sieve** | |
|---|---|
| **Sieve Mesh** | **Percent** |
| 6.3 mm | 100 |
| 5.0 mm | 90 - 100 |
| 3.35 mm | 70 - 90 |
| 2.36 mm | 55 - 75 |
| 1.18 mm | 35 - 55 |
| 600 µm | 15 - 35 |
| 212 µm | 5 - 15 |

Typically, the aggregate contains approximately 5 - 10 % by weight moisture and is at ambient temperature, typically in the range 5 - 20 °C, before the addition of the bitumen.

The limestone filler used comprises material having a particle size typically of 85 % not greater than 75µm, and is typically at ambient temperature, i.e. approximately 5 - 20 °C before addition to the mixer.

### (b) Procedure :

To produce the mastic product, the pre-wetted aggregate, with a controlled moisture content and in an amount corresponding to 65.9 to 70.1 percent by weight of the mastic product, was charged into an appropriate mixer. The bitumen was heated to a temperature in the range 180 - 210 °C and added and mixed with the pre-wetted aggregate. The addition of the bitumen took place over a period of 5 - 8 seconds, whilst mixing was continued, and during this time the temperature of partially-coated aggregate mixture fell to approximately 70°C.

After a further delay of approximately 10 seconds, during which mixing was continued, a quantity of the cold limestone filler sufficient to amount to between 15 and 19 percent by weight of the final mastic product was added over a period of 5 seconds, during which the temperature of the mixture fell to approximately 50 °C.

The mastic produced by the above process comprises free-flowing granules having sizes typically in the range 0.1 mm to 50 mm. The final product has a designed moisture content in the range 1 - 4 % which provides the necessary lubrication to ensure that it has a free-flowing nature.

The material may be bagged for storage and transportation to the point of use and may be used in the same manner as any other granular mastic product.

To illustrate the importance of controlling the moisture content, the following two Examples describe the production of mastic products with too low and too high moisture content respectively.

### Example 2 : low moisture content

The following example relates to the manufacture of a 2 tonne batch of mastic primarily intended for marine applications. The bitumen used is 85/25 oxidised grade bitumen, in the quantity required to provide between 14 and 16 percent by weight of the final mastic product. The aggregate used has the same particle size range as in Example 1. The limestone filler used comprised material having a particle size typically of 85% not greater than 75µm and would typically be at ambient temperature i.e. approximately 10°C before addition to the mixer.

The bitumen was heated to a temperature in the range 180 - 210°C and added to a quantity of cold wet aggregate in an amount corresponding to 65.9 to 70.1 percent by weight of the mastic product, the aggregate being previously charged into an appropriate mixer. In this Example the aggregate contains 2% by weight moisture and is at 10°C before the addition of the bitumen. The addition of the bitumen took place over a period of 5 - 8 seconds, whilst mixing continued, and during this time the temperature of partially coated aggregate mixture fell to approximately 75°C. After a further delay of approximately 10 seconds, during which mixing was continued, a quantity of cold limestone filler sufficient to amount to between 15 - 19 percent by weight of the final mastic product was added over a period of *5* seconds, during which the temperature of the mixture fell to approximately 50°C.

The mastic produced by the above process comprises a partially cohesive material containing about 0.5% moisture which is not free-flowing. This result is attributed to the moisture content in the aggregate i.e. 2% being too low and therefore insufficient to provide the necessary lubrication to impart a free-flowing characteristic with insufficient moisture present in the aggregate, the mastic produced therefore of a cohesive nature where the bitumen is able to bind the mixture together.

### Example 3 : high moisture content

The above example was repeated, except the moisture content in the aggregate was increased to 14%. This resulted in a final mastic which was free-flowing and granular in appearance with a moisture content of 8%. This higher moisture content, however, would not normally be commercially acceptable to the end user because it results in the need for increased energy consumption, i.e. extra heat to remove the excess water when heating to reconstitute the mastic prior to, for example, sealing a pipeline joint. The phenomenon of 'kettle boil over' (excess water rising above the top of the container in which the mastic is heated prior to use) attributed to such high moisture content is also deemed to be a problem by the user.

It is therefore necessary to control the moisture content in the final product to a range not exceeding 4% with a mean of 3.5% taken from 30 consecutive individual test results. This is achieved by controlling the aggregate moisture content between 5 and 10% prior to charging into the mixer to produce the mastic.

Whilst Example 1 described above relates to a mastic product intended primarily for marine use, the invention is not limited to any specific composition of asphalt and is also applicable to mastics for other applications.

In particular, the composition may be formulated as appropriate for the manufacture of a granular mastic for use in roofing, or flooring, or tanking, or as a damp-proof course, using suitable grades of bitumen and aggregates preferably to conform to relevant British Standards, such as BS 6925: 1988 or BS 6577: 1985, as in Examples 4 and 5 following.

### Example 4 : roofing mastic

The bitumen used is 60/40 grade bitumen, (i.e. having a ring and ball softening point between 50 and 70°C and a penetration value between 30 and 50) in the quantity required to provide between 11 and 13.5% by weight of the final mastic product. The aggregate used has a particle size range as set out in the following table;

| **Grading/Composition** | | |
|---|---|---|
| **Passing Sieve Mesh and Retained on Sieve Mesh** | | **Percent** |
| 600 µm | 212 µm | 8 - 32 |
| 212 µm | 75 µm | 8 - 25 |
| 75 µm | --- | 40 - 56 |

The bitumen was heated to a temperature in the range 160 - 190°C and added to a quantity of cold, wet aggregate with a controlled moisture content in an amount corresponding to 66.5 - 69% by weight of a mastic product, the aggregate being previously charged into an appropriate mixer. The addition of the bitumen took place over a period of 5 - 8 seconds, whilst mixing continued and during this time the temperature of partially coated aggregate mixture fell to approximately 70°C. After a further 10 seconds, during which mixing was continued, a quantity of cold limestone filler sufficient to amount to about 20% by weight of the final mastic product was added over a period of 5 seconds, during which the temperature of the mixture fell to approximately 50°C. It should be noted that the final product contained 35 - 45% filler, of which about half arises from filler inherent in the aggregate and about half was added as filler.

### Example 5 : flooring mastic

Bitumen used is a H100/120 grade bitumen, in the quantity required to provide between 12 and 18% by weight of the final mastic product. The aggregate used has a particle size range as set out in the following table;

| **Grading/Composition** | | |
|---|---|---|
| **Passing Sieve Mesh and Retained on Sieve Mesh** | | **Percent** |
| --- | 2.36mm | 0 - 3 |
| 2.36mm | 600 µm | 5 - 25 |
| 600 µm | 212 µm | 10 - 30 |
| 212 µm | 75 µm | 10 - 30 |
| 75 µm | --- | 45 - 55 |

Typically the aggregate contains approximately 5 - 10% by weight moisture and is at ambient temperature i.e. 5 - 20°C before the addition of the bitumen. The limestone filler used comprised material having a particle size typically 85% not greater than 75µm and is typically at ambient temperature i.e. 5 - 20°C before addition to the mixer.

The bitumen was heated to a temperature of 190 - 230°C and added to a quantity of cold, wet aggregate with a controlled moisture content in an amount corresponding to 54 - 68% by weight of the mastic product, the aggregate being previously charged into an appropriate mixer. The addition of the bitumen took place over a period of 5 - 8 seconds, whilst mixing continued and during this time the temperature of partially coated aggregate mixture fell to approximately 80°C. After a further 10 seconds, during which mixing was continued, a quantity of cold limestone filler sufficient to amount to about 20 - 28% by weight of the final mastic product was added over a period of 5 seconds during which the temperature of the mix fell to approximately 60°C. In this case also about half of the final filler content of about 40 - 56% was derived from material inherent in the aggregate.

The mastic produced in Examples 4 and 5 by the above process comprises free-flowing granules having sizes typically in the range 0.1mm-50mm.

## Claims

1. A method of preparing a mastic product comprising bitumen, filler and aggregate comprising the steps of introducing into a mixer aggregate in an unheated and undried condition and with a water content controlled to be at least 4% by weight by reference to the total mastic composition, adding all the required bitumen at elevated temperature while the mixer is in operation, subsequently adding the required filler in an unheated condition and continuing mixing operation whilst allowing the mixture to cool, to produce a granular product.

2. A method according to Claim 1 wherein the moisture content of the aggregate added to the mixer does not exceed 10%.

3. A method according to Claim 2 wherein the moisture content of the material added to the mixer is controlled so as to maintain a designed mean water content in the final product of about 3.5% and a maximum of 4 %.

4. A method according to any one of the preceding Claims wherein the bitumen has a softening point of 50° C or higher.

5. A method according to any one of the preceding Claims wherein the bitumen has a penetration value of 50 or lower.

6. A method according to any one of the preceding Claims wherein the bitumen is modified by the addition of one or more polymers.

7. A method according to any one of the preceding Claims wherein the mastic composition includes additives to control the rheology of the mixture.

8. A mastic composition produced by the method as claimed in any one of the preceding Claims.

9. A method of preparing a mastic product comprising bitumen, filler and aggregate substantially as hereinbefore described with reference to Examples 1, 4 or 5.

10. A mastic product produced in accordance with Claim 9 having a final moisture content of between 1% and 8%.

## Patentansprüche

1. Verfahren zur Herstellung eines Mastix-Produkts, welches Bitumen, Füllstoff und Zuschlagstoff umfaßt, welches die Schritte umfaßt eines Einführens, in einen Mischer, von Zuschlagstoff in einem unerwärmten und ungetrockneten Zustand und mit einem Wassergehalt, der gesteuert wird, um wenigstens 4 Gew.-% in bezug auf die gesamte Mastix-Zusammensetzung zu sein, eines Zufügens des gesamten erforderlichen Bitumens bei erhöhter Temperatur, während der Mischer in Betrieb ist, eines anschließenden Zufügens des erforderlichen Füllstoffs in einem unerwärmten Zustand und eines Fortführens des Mischens, während die Mischung abkühlen kann, um ein granulares Produkt herzustellen.

2. Verfahren nach Anspruch 1, **dadurch gekennzeichnet, daß** der Feuchtigkeitsgehalt des zu dem Mischer zugefügten Zuschlagstoffs 10 % nicht übersteigt.

3. Verfahren nach Anspruch 2, **dadurch gekennzeichnet, daß** der Feuchtigkeitsgehalt des zu dem Mischer zugefügten Materials gesteuert wird, um einen bestimmten mittleren Wassergehalt in dem Endprodukt von etwa 3,5 % und ein Maximum von 4 % aufrechtzuerhalten.

4. Verfahren nach einem der vorangehenden Ansprüche, **dadurch gekennzeichnet, daß** das Bitumen einen Erweichungspunkt von 50°C oder höher aufweist.

5. Verfahren nach einem der vorangehenden Ansprüche, **dadurch gekennzeichnet, daß** das Bitumen einen Penetrationswert von 50 oder weniger aufweist.

6. Verfahren nach einem der vorangehenden Ansprüche, **dadurch gekennzeichnet, daß** das Bitumen durch den Zusatz eines oder mehrerer Polymere modifiziert wird.

7. Verfahren nach einem der vorangehenden Ansprüche, **dadurch gekennzeichnet, daß** die Mastix-Zusammensetzung Additive einschließt, um die Rheologie der Mischung zu steuern.

8. Mastix-Zusammensetzung, die durch das Verfahren nach einem der vorangehenden Ansprüche hergestellt ist.

9. Verfahren zum Herstellen eines Mastix-Produktes, welches Bitumen, Füllstoff und Zuschlagstoff umfaßt, wie zuvor im wesentlichen unter Bezugnahme auf Beispiele 1, 4 oder 5 beschrieben.

10. Mastix-Produkt, hergestellt gemäß Anspruch 9 mit einem endgültigen Feuchtigkeitsgehalt von zwischen 1 % und 8 %.

## Revendications

1. Procédé de préparation d'un produit de type mastic comprenant du bitume, une charge et un agrégat comprenant les étapes consistant à introduire dans un mélangeur un agrégat dans un état non chauffé et non séché et ayant une teneur en eau contrôlée pour qu'elle soit d'au moins 4 % en poids par rapport à la composition de mastic totale, ajouter tout le bitume nécessaire à une température élevée alors que le mélangeur fonctionne, ajouter ensuite la charge nécessaire dans un état non chauffé et poursuivre l'opération de mélange tout en laissant refroidir le mélange, pour produire un produit granulaire.

2. Procédé selon la revendication 1, dans lequel la teneur en humidité de l'agrégat ajouté dans le mélangeur ne dépasse pas 10 %.

3. Procédé selon la revendication 2, dans lequel la teneur en humidité du matériau ajouté dans le mélangeur est contrôlée de façon à maintenir une teneur en eau moyenne désignée dans le produit final comprise entre environ 3,5 % et 4 % au maximum.

4. Procédé selon l'une quelconque des revendications précédentes, dans lequel le bitume a un point de ramollissement de 50°C ou plus.

5. Procédé selon l'une quelconque des revendications précédentes, dans lequel le bitume a un indice de pénétration de 50 ou moins.

6. Procédé selon l'une quelconque des revendications précédentes, dans lequel le bitume est modifié par l'addition d'un ou de plusieurs polymères.

7. Procédé selon l'une quelconque des revendications précédentes, dans lequel la composition de mastic comprend des additifs pour contrôler la rhéologie du mélange.

8. Composition de mastic produite par le procédé selon l'une quelconque des revendications précédentes.

9. Procédé de préparation d'un produit de type mastic comprenant du bitume, une charge et un agrégat essentiellement comme décrit précédemment en référence aux exemples 1, 4 ou 5.

10. Produit de type mastic produit selon la revendication 9 ayant une teneur en humidité finale comprise entre 1 % et 8 %.
